Europäisches Patentamt

European Patent Office

Office européen des brevets

(11) Publication number: 0 316 938 A2

# (12) EUROPEAN PATENT APPLICATION

(21) Application number: 88119219.9

(22) Date of filing: 18.11.88

(51) Int. Cl.⁴: **A23C 9/15 , A23C 9/142 , A23C 11/04**

(30) Priority: 19.11.87 GB 8727105

(43) Date of publication of application:
24.05.89 Bulletin 89/21

(84) Designated Contracting States:
DE ES FR GR IT

(71) Applicant: **DANISH FANCY FOOD GROUP A/S**
**Toldbodgade 9-15**
**DK-5000 Odense(DK)**

Applicant: **MILEI GMBH**
**Rosensteinstrasse 20**
**D-7000 Stuttgart 1(DE)**

(72) Inventor: **Herning, Arne**
**c/o Danish Fancy Food Group A/S 9-15**
**Toldbodgade**
**DK-5000 Odense C(DK)**
Inventor: **Lorenzen, Peter Chr.**
**c/o Milei GmbH Rosensteinstrasse 20**
**D-7000 Stuttgart 1(DE)**
Inventor: **Lassleben, Karl**
**c/o Milei GmbH Rosensteinstrasse 20**
**D-7000 Stuttgart 1(DE)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) Milk concentrate and process for the preparation thereof.

(57) A milk concentrate is described consisting of 8-12% fats, 9-11% milk protein, 1.5-1.7% lactose, 2.8-3.2% saccharose, about 2% minerals, about 0.5% salt and the balance water. The milk concentrate is prepared by ultrafiltration of a skimmed milk of a solids content of about 10% to form a product having a solids content of about 20% which product is mixed with fats, saccharose and salt in such proportions as to obtain the desired composition, whereafter the product of the said composition is homogenized and heat treated in a UHT-process.

EP 0 316 938 A2

## Milk concentrate and process for the preparation thereof

The present invention concerns a milk concentrate and a process for the preparation thereof.

In parts of the world the population has no possibility or little possibility of obtaining liquid milk of a satisfactory high quality.

The population has to do with milk prepared from milk powder, recombined milk and/or milk which has been made long term stable by an UHT-treatment-ultra high temperature treatment - which results in changes of taste.

Moreover, many people are intolerant to lactose. Milk with a normal content of lactose causes digestion problems and stomach pain.

Therefore, there is a need for a milk product which is long term stable and does not have the drawbacks of a normal lactose content but which nevertheless is of a high organoleptic quality and can be prepared by a simple and cheap process.

The invention concerns such a milk product, more particularly a concentrate which on dilution with about two parts of water provides a milk which tastewise and nutritionwise corresponds to full milk.

The milk concentrate according to the invention is characteristic by the fact that it contains:

| Fats | 8-12% |
| Milk protein | 9-11% |
| Lactose | 1.5-1.7% |
| Saccharose | 2.8-3.2% |
| Minerals | about 2.0% |
| Salt | about 0.5% |
| Water | balance |

On dilution of 1 part of this concentrate with 2 parts of water a beverage is obtained which has the same content of milk protein and fat as a full milk, a lactose content which is reduced to about one tenth of the lactose content of full milk, and a content of saccharose of about l%. The beverage tastes like full milk and has no after-taste notwithstanding the fact that by the process according to the invention it is subjected to an UHT-treatment.

The milk concentrate according to the invention may also contain added vitamins without otherwise changing the above mentioned composition.

The process according to the invention for the preparation of the milk concentrate is characterised in that a skimmed milk having a solids content of about 10% is subjected to an ultrafiltration to remove the bulk of the lactose so as to obtain a product having a solids content of about 20%, the chief part of which is milk proteins, which product is then mixed with fats, saccharose and salt in such proportions that a composition as mentioned above is obtained whereafter the resulting product is homogenized and heat treated in an UHT-process.

Ultrafiltration of milk is known as such but by starting with a skimmed milk having about 10% solids and filtrate to a solids content of about 20% a very gentle concentration is achieved and such reduction of the content of lactose that the resulting concentrate by admixture with fats, saccharose, and salt lends itself to provide a product of the desired composition which stands UHT-treatment without thereby developing an undesired boiled taste or caramel taste. UHT-treatment of milk is known as such but causes undesired changes of taste if the milk has a normal content of lactose. Such changes of taste do not arise in the process according to the invention where a product is treated in which the lactose has been partially replaced by saccharose.

The fats in the milk concentrate according to the invention may of course be milk fats, but it is also possible to replace the milk fats wholly or in part by vegetable fats, e.g. fats with a high content of unsaturated fatty acids, seeing that the addition of the fat is to an ultrafiltrated concentrate of a skimmed milk which has a low content of milk fats of only about 0.1%.

In carrying out the process according to the invention one may for instance proceed in the manner that the starting material is a skimmed milk having the composition:

| Milk proteins | 3.5% |
|---|---|
| Lactose | 4.9% |
| Milk fat | 0.1% |
| Minerals | 0.7% |
| Water | 90.8% |

After ultrafiltration the prepared concentrate has a content of lactose of only about 2.5%, but as during the ultrafiltration, in addition to lactose, also some minerals (salts) are removed the concentrate is mixed in the following step with fats, saccharose and salt (NaCl) in such proportions that for instance the following composition is obtained:

| Milk Protein | 10% |
|---|---|
| Fats | 11% |
| Lactose | 1.6% |
| Saccharose | 3.0% |
| Minerals | 2.0% |
| Salt | 0.5% |
| Water | 71.9% |

The mixing is conveniently carried out by heating concentrate and fats to about 50° C. Thereafter the product is homogenized and subjected to an UHT-treatment, e.g. at 138° C for two seconds.

The invention is further illustrated in the following examples.

## EXAMPLE 1

100,000 kilos of skimmed milk having the composition:

3.5% milk proteins
4.4% lactose
0.1% milk fat
0.7% minerals
90.8% water

are subjected to an ultrafiltration in an ultrafiltration plant equipped with a membrane of polysulphone having a cut off limit of 20,000 (gr. 60 pp from De Danske Sukkerfabrikker A/S) at a temperature of 50-60° C and a pressure of 8 bars.

Thereby 22,222 kilos of concentrate are obtained containing:

15.0% milk proteins
2.5% lactose
0.1% milk fat
2.4% minerals.

647 kilos of this concentrate are mixed at 50° C with 128 kilos of 50° warm melted butter, 30 kilos of saccharose, 5 kilos of NaCl and 190 kilos of 50° C warm water in a vessel provided with agitator and heating jacket for 5 minutes.

The mixture is passed through the first stage of a two-stage aseptic plunger homogenizor at a pressure of 150 bars in the crusher unit and from there to a Stork pipe pasteurizor in which the product is heated to 138° C and maintained at that temperature for 4 seconds. After ccooling in a heat exchanger the product is passed through the second stage of the homogenizor at a pressure of 60 bars whereupon it is cooled to 5° C in a heat exchanger. From the heat exchanger the concentrate is taken to sterile packing in Tetrapak cartons. The concentrate has the following composition:

9.7% milk proteins
10.5% milk fat
1.6% lactose
3.0% saccharose
2.0% minerals
0.5% salt

3

72.7% water

By dilution of 1 part of concentrate with 2 parts of cold water a beverage is obtained without boiled taste and of the same quality as full milk.

EXAMPLE 2

The procedure is as in Example 1 but the 647 kilos of concentrate are in this case mixed with 105 kilos of hydrogenated palm-kernel oil (melting point 30-32°C), 30 kilos of saccharose, 5 kilos of NaCl, and 213 kilos of water. Thereby a concentrate is obtained having the composition:

9.7% milk proteins
10.5% vegetable fat
1.6% lactose
3.0% saccharose
2.0% minerals
0.5% salt
72.7% water

On dilution of 1 part of concentrate with 2 parts of cold water there is likewise obtained a beverage without boiled taste and of the same quality as full milk.

## Claims

1. A milk concentrate consisting of 8-12% fats, 9-11% milk protein, 1.5-1.7% lactose, 2.8-3.2% saccharose, about 2% minerals, about 0.5% salt and the balance water.

2. A milk concentrate as claimed in claim 1, in which the fats consist wholly or in part of vegetable fats.

3. A process for the preparation of a milk concentrate as claimed in claims 1 and 2, **characterised** in that a skimmed milk having a solids content of about 10% is subjected to ultrafiltration to remove the bulk of the lactose to obtain a product with a solids concent of about 20%, the chief part of which is milk proteins, which product is then mixed with fats, saccharose and salt in such proportions as to obtain a composition of 8-12% fats, 9-11% milk protein, 1.5-1.7% lactose, 2.8-3.2% saccharose, about 2% minerals, about 0.5% salt and the balance water, whereafter the resulting product is homogenized and heat treated in an UHT-process.

4. A process as claimed in claim 3, **characterised** in that the UHT-treatment is carried out at about 138°C for about 4 seconds.

5. A process as claimed in claims 3 and 4, **characterised** in that the fats which are added to the concentrate after ultrafiltration are constituted wholly or in part of vegetable fats.